# EUROPÄISCHE PATENTSCHRIFT

(11) **EP 3 233 656 B1**
(45) Veröffentlichungstag und Bekanntmachung des Hinweises auf die Patenterteilung: **12.10.2022**
(21) Anmeldenummer: 15808416.0
(22) Anmeldetag: 14.12.2015
(51) Int. Cl.: B65D 51/28, B32B 3/04

(54) **BEFÜLLBARER VERSCHLUSS MIT DRUCKKNOPF ZUM AUSLÖSEN**
FILLABLE CLOSURE DEVICE WITH PUSH-BUTTON FOR RELEASING
DISPOSITIF DE FERMETURE REMPLISSABLE À BOUTON-POUSSOIR POUR LE DECLENCHEMENT

(30) Priorität: 15.12.2014 CH 19362014
(43) Veröffentlichungstag der Anmeldung: 25.10.2017
(73) Patentinhaber: Bevaswiss AG, 8212 Neuhausen am Rheinfall (CH)
(72) Erfinder: SEELHOFER, Fritz, CH-8315 Lindau (CH)
(74) Vertreter: Felber, Josef
(86) Internationale Anmeldenummer: PCT/EP2015/079573
(87) Internationale Veröffentlichungsnummer: WO 2016/096710

(56) Entgegenhaltungen:
- US-A1- 2011 174 642

## Beschreibung

Diese Erfindung betrifft einen befüllbaren Verschluss, der mittels eines Druckknopfes auslösbar ist, sodass entweder eine im Innern des Verschlusses untergebrachte, separat befüllte Kapsel dadurch geöffnet wird und in den Behälter entleert wird, mit dem der Verschluss ausgerüstet ist, oder aber der Verschluss selbst eine solche Kapsel bildet, die dann geöffnet wird.

Viele Getränke werden heute schon durch Mischen eines Konzentrates mit Wasser erzeugt. Anstatt das fertige Gemisch zu distribuieren, wäre es viel effizienter, wenn die Flaschenabfüller vor Ort bloss Wasser abfüllen könnten, und das Konzentrat erst beim Konsumenten durch das erstmalige Öffnen der Flasche dem Wasser in der Flasche zugegeben und es dann mit ihm gemischt würde. Auch das Zudosieren von allerlei empfindlichen Wirkstoffen und lichtempfindlichen Vitaminen kann mit so einem Verschluss realisiert werden.

Eine bekannte Lösung für ein Zudosieren einer separaten Flüssigkeit ist ein Kunststoff-Dosierverschluss und zugehöriger Behälterhals für einen Behälter wie er aus WO2012/175317 A1 hervorgeht. Es handelt sich um einen befüllbaren Verschluss mit Druckknopf zum Auslösen, der mit einer separat befüllten Kapsel funktioniert. Der Verschluss besteht aus einer auf den Gewindestutzen eines Behälters aufschraubbaren Verschlusskappe, in welche diese separat befüllte Kapsel in geschlossenem Zustand von unten einsetzbar ist, mit nach unten gerichteter Siegelfolie der Kapsel. Die Oberseite der eingesetzten Kapsel ist deformierbar ausgeführt und axial nach unten drückbar, sodass die nach unten gerichtete Siegelfolie der Kapsel gebrochen oder zum Platzen gebracht werden kann. Das wird gemäss diesem Dokument durch ein an der Unterseite der Verschlusskappe angeformtes, axial nach unten ragendes Profil bewirkt, welches in eine zum Querschnitt dieses Profils passende Vertiefung in der deformierbaren Oberseite der eingesetzten Kapsel einpasst. Durch Niederdrücken dieses Profiles in die Vertiefung werden die äusseren unteren Ecken des Profils auf die Siegelfolie der Kapsel gedrückt. Die Siegelfolie ist mit Schwächungslinien versehen, sodass diese Ecken auf die Winkelhalbierenden der durch die Schwächungslinien gebildeten Kreissegmente auftreffen und dieselben nach Aufplatzen der Schwächungslinien von den Ecken des Profils nach unten schwenkbar sind und hernach nach unten geschwenkt haltbar sind. In der Praxis zeigt sich allerdings, dass diese Lösung zwar im Grundsatz funktioniert, aber nicht in jedem Fall einwandfrei, das heisst nicht in 100% der Fälle. Somit ist diese Lösung für eine Implementierung in der Praxis, in welcher Hunderttausende von Verschlüssen ausgeliefert werden müssen und jeder einzelne perfekt funktionieren muss, zuwenig tauglich. Eine weitere Lösung ist aus der US 2011/0174642 A1 bekannt. Gezeigt ist dort ein befüllbarer Verschluss mit Druckknopf zum Auslösen der Entleerung, bestehend aus einer auf den Gewindestutzen eines Behälters aufschraubbaren Verschlusskappe, welche eine befüllbare, unten offene Kapsel bildet oder in welche eine separate befüllbare Kapsel einsetzbar ist, mit nach unten gerichtetem Siegel der Kapsel. Die Oberseite der Kapsel ist deformierbar ausgeführt und sie ist nach unten drückbar, sodass das nach unten gerichtete Siegel der Kapsel durch diese Aktion aufbrechbar oder aufplatzbar ist. Hierzu ist an der Unterseite der Verschlusskappe ein axial nach unten ragendes Drückerelement angeformt. Dieses Drückerelement ist V-förmig gestaltet, wie aus der Figur 34 ersichtlich. Zwei Wände bilden Schenkel, die über ihre Länge einstückig mit dem Boden der Kapsel verbunden sind. Die nach abwärts gerichteten freien Ränder dieses im Querschnitt V-förmigen Drückerelementes steigen gegen eine Spitze hin an, wo sich die beiden Wände treffen. Beim Niederdrücken des Drückerelementes wird die darunter verlaufende Folie zunächst mit der Spitze aufgestochen oder aufgebrochen und hernach von den Rändern der Wände abgeklappt.

Es ist daher die Aufgabe der vorliegenden Erfindung, einen befüllbaren Verschluss zu schaffen, dessen Befüllung mittels Betätigen eines Druckknopfes in den mit dem Verschluss ausgerüsteten Behälter fällt, indem entweder eine im Innern des Verschlusses untergebrachte, separat befüllte Kapsel durch das Auslösen in den Behälter entleert wird, oder aber der Verschluss selbst eine solche Kapsel bildet, die durch das Auslösen des Druckknopfes entleert wird. Dieser befüllbare Verschluss soll noch einfacher in der Herstellung und Montage als die bisher bekannten Lösungen sein, aus einer minimalen Anzahl Teilen bestehen, und durch eine einzige Handlung - eine einzelne Aktion - so betätigbar sein, dass seine Befüllung absolut sicher und zuverlässig in den mit dem Verschluss ausgerüsteten Behälter entleert wird. Der Verschluss soll insbesondere sicherstellen, dass das einmal aufgeplatzte Siegel aufgrund von elastischen Kräften nicht wieder halbwegs zu gehen kann, sondern einmal geöffnet zuverlässig vollständig offen gehalten wird. Ausserdem soll in einer besonderen Ausführung die Füllung der Kapsel im Verschluss vor dem Eindringen von Sauerstoff, UV-Strahlung und Wasserdampf aus der Umgebung geschützt sein.

Diese Aufgabe wird gelöst von einem befüllbarer Verschluss mit Druckknopf zum Auslösen der Entleerung, bestehend aus einer auf den Gewindestutzen eines Behälters aufschraubbaren Verschlusskappe, welche eine befüllbare, unten offene Kapsel bildet oder in welche eine separate befüllbare Kapsel einsetzbar ist, mit nach unten gerichtetem Siegel der Kapsel, wobei die Oberseite der Kapsel deformierbar ausgeführt ist und nach unten drückbar ist, sodass das nach unten gerichtete Siegel der Kapsel durch diese Aktion aufbrechbar oder aufplatzbar ist, indem an der Unterseite der Verschlusskappe ein axial nach unten ragendes Drückerelement angeformt ist, zum Aufdrücken des Siegels der Kapsel, wobei das Drückerelement in der Verschlusskappe entweder im Querschnitt senkrecht zur Rotationsachse der Verschlusskappe V-förmig gestaltet ist, sodass zwei Wände als Schenkel gebildet sind, die über ihre Länge einstückig mit dem Boden der Kapsel verbunden sind, und dass die nach abwärts gerichteten freien Ränder dieses im Querschnitt V-förmigen Drückerelementes gegen eine Spitze auslaufen, wo sich die beiden Wände treffen, oder alternativ dass mit einem Drückerelement ein hufeisenförmiger Lappen um einen längs einer geraden Schnittlinie am Siegel gebildetes Scharnier nach abwärts schwenkbar ist, nachdem dieser Lappen längs einer Schnittlinie aus dem Siegel gebrochen wurde, und das Drückerelement diesen Lappen hernach in dieser abgeschwenkten Lage festhält, damit er nicht mehr zurückschwenken kann, und die Kapsel somit vollständig entleert werden kann, sodass in beiden Varianten eine Folie zunächst aufstech- oder aufbrechbar ist, und hernach nach unten abklappbar ist, *und der sich dadurch auszeichnet,* dass das Siegel aus einem Laminat besteht, mit einem Trägermaterial von wenigstens 0.2mm Stärke, daran in Bezug auf die Kapsel nach aussen anschliessend einer Barrieren-Folie als Sauerstoff-, Wasserdampf- und UV-Strahlungs-Barriere und auf dieser Barrieren-Folie eine Siegelschicht in Form eines Lackes oder einer PE-Laminatschicht aufgespritzt oder auflaminiert ist, welche das Siegel an seinem äusseren Rand um den Rand der Barrieren-Folie und den Rand des Trägermaterials herum umbördelt und auf der in Bezug auf die Kapsel inneren Seite des Trägermaterials auf diesem einen umlaufenden Rand bildet, mittels dessen es mit dem Kapselrand versiegelbar ist, und dass das Trägermaterial Vorkerbungen in Form von Schnitten aufweist, welche das Trägermaterial annähernd durchschneiden, die anschliessenden Folien jedoch intakt lassen.

Damit erfolgt das Aufplatzen erstens kontrolliert und das einmal aufgeplatzte Siegel wird sicher offengehalten. Die Kapsel wird beim Niederdrücken des Druckknopfes infolge einer Reduktion ihres Volumens entleert, und ausserdem werden die nach unten ragenden Segmente des Siegels zuverlässig nach unten geschwenkt und somit die Kapsel offen gehalten, sodass der Kapselinhalt zuverlässig und vollständig in den mit dem Verschluss ausgerüsteten Behälter abfliessen kann. Weiter ist durch den Laminataufbau des Siegels die Dichtigkeit gegen Eindringen von Sauerstoff, Wasserdampf oder UV-Strahlung gewährleistet. Das Trägermaterial weist Vorkerbungen in Form von Schnitten auf, welche das Trägermaterial annähernd durchschneiden, die anschliessenden Folien jedoch intakt lassen. Damit wird dank dieser Folie einerseits eine Sauerstoff-, Wasserdampf- und UV-Strahlungs-dichte Kapsel geschaffen, und zweitens bietet der Verschluss eine kostengünstige Herstellung und eine sichere und einfache Bedienung zum Öffnen der Kapsel, sodass deren Inhalt sicher in den ausgerüsteten Behälter fällt.

In den Figuren sind verschiedene Varianten dieses befüllbaren Verschlusses mit Druckknopf zum Auslösen in jeweils mehreren Ansichten dargestellt. Anhand dieser Figuren wird der Verschluss im Einzelnen beschrieben und seine Funktion wird erklärt.

Es zeigt:
- FIG. 1: Eine erste Variante mit direkter Betätigung der Kapselentleerung in einem perspektivischen Querschnitt dargestellt;
- FIG. 2: Den Verschluss mit der zugehörigen separat befüllten Kapsel und deren separat gezeichnetem Siegel;
- FIG. 3: Den Verschluss in einem perspektivischen Querschnitt dargestellt, und daneben den umbördelbaren Rand der von unten einsetzbaren Kapsel zu deren Sicherung als Detaillösung A und als Alternative einen Widerhaken zum Halten der Kapsel als Detaillösung B;
- FIG. 4: Diesen Verschluss nach dem Niederdrücken des Druckknopfes, mit aufgeplatztem Siegel und mit entleerter Kapsel;
- FIG. 5: Eine erste Lösung für die Erstöffnungsgarantie an diesem Verschluss;
- FIG. 6: Eine zweite Lösung für die Erstöffnungsgarantie mit gleichzeitig auf der Aussenseite der Kapsel realisierter Sauerstoff-, UV- und Wasserdampf-Barriere;
- FIG. 7: Eine zweite Variante des Verschlusses mit durch die Verschlusskappe selbst gebildeter, unten offener Kapsel, die separat in gestürzter Lage des Verschlusses befüllbar ist, sowie das zugehörige Siegel;
- FIG. 8: Ein Siegel mit einer hufeisenförmigen Vorkerbung des Trägermaterials;
- FIG. 9: Ein Siegel mit einer quadratischen Vorkerbung und im Innern des Quadrates diagonal verlaufenden Vorkerbungen;
- FIG. 10: Ein Siegel mit zwei geraden Scharnierlinien und einer wellenförmigen Bruchlinie und zwei halbkreisförmigen Bruchlinien;
- FIG. 11: Das Siegel aus Figur 8 in einem Querschnitt längs der Linie A-A in Figur 8 dargestellt;
- FIG. 12: Das Siegel nach Figur 11 nach dem Drücken und Ausbrechen des hufeisenförmigen Lappens;
- FIG. 13: Die Verschlusskappe mit niedergedrücktem Druckknopf von schräg unten gesehen, nach Aufbrechen und Aufschwenken des herausbrechbaren Teils des Siegels;
- FIG. 14: Die Verschlusskappe von schräg unten gesehen mit einem im Querschnitt V-förmigen Drückerelement, das an der Verschlusskappe nach abwärts in eine Spitze ausläuft;
- FIG. 15: Die Verschlusskappe nach Figur 14 in einem diametralen Schnitt dargestellt.

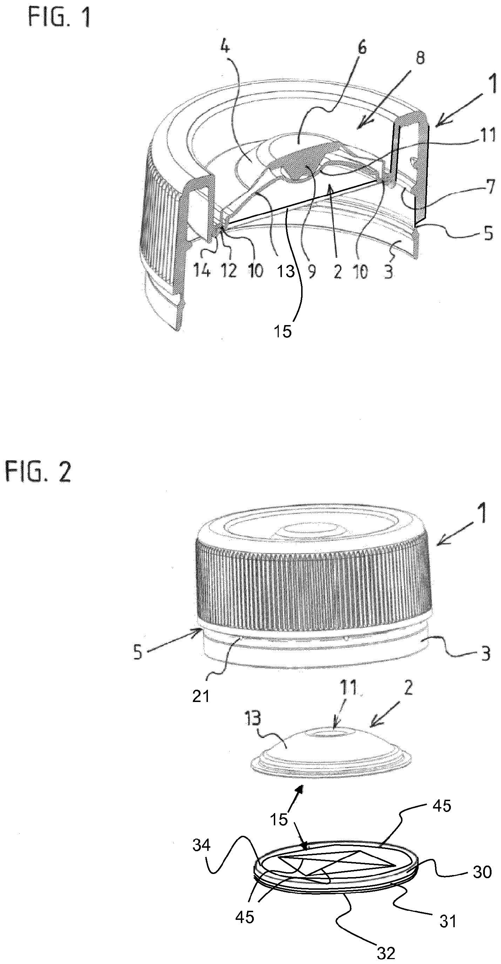

Die in den Fig. 1, 3, 4 und 7 dargestellten Verschlüsse entsprechen nicht dem Gegenstand der Erfindung, da das Druckelement nicht die beanspruchte Form aufweist.

In Figur 1 sieht man eine erste Variante dieses Verschlusses, welcher die Entleerung der separat befüllten und eingesetzten Kapsel 2 mit einer einzigen direkten Betätigung ermöglicht. Der Verschluss bildet eine Verschlusskappe 1 mit einem Innengewinde 7, sodass sie auf einen Gewindestutzen eines Behälters aufschraubbar ist. Am unteren Rand der Verschlusskappe 1 weist diese ein umlaufendes Band 3 auf, welches über eine Dünnstelle 5 mit der Verschlusskappe 1 verbunden ist. Dieses Band 3 bietet eine Erstöffnungsgarantie und verbleibt beim Losschrauben der Verschlusskappe 1, wenn die Flasche das erste Mal geöffnet wird, am Flaschenstutzen, weil dann die Dünnstelle 5 reisst. Die Verschlusskappe 1 weist auf ihrer Oberseite eine Einlassung 8 auf, das heisst eine Vertiefung der Deckelfläche. Diese Deckelfläche ist im gezeigten Beispiel als giebelförmiger, in axialer Richtung deformierbarer Druckknopf 4 ausgeführt, dessen abgeplattete Spitze eine hier kreisrunde Drückerfläche 6 bildet. Die Drückerfläche 6 ist auf ihrer Unterseite in einen Höcker 9 als Drückerelement ausgeformt, und die Wand des Druckknopfes 4 ist verhältnismässig dünn ausgeführt, sodass der Druckknopf 4 von der hier von oben gesehen konvexen Ausformung durch Druck auf die Drückerfläche 6 in axialer Richtung nach unten drückbar ist, unter Deformation der Druckknopfwand. Damit ist der Druckknopf 4 nach unten in eine von aussen gesehen konkave Form drückbar. Auf der Unterseite des Druckknopfes 4 bildet dieser mit seinem äusseren Rand eine umlaufende, nach unten ragende Schulter 10. Auf diese Schulter 10 ist von unten eine kreisrunde Kapsel 2 aufsetzbar, die dann mit ihrem äusseren Rand passgenau auf dieser Schulter 10 anliegt und auf ihr durch eine Umbördelung 14 gehalten ist. Diese Kapsel 2 besteht ihrerseits aus einem kuppelartigen Oberteil, welches am äusseren Rand in eine oben und unten ebene Auskragung 12 ausläuft. Im Zentrum des Oberteils der Kapsel 2 ist eine Vertiefung 11 ausgeformt, in welche der Höcker 9 am Druckknopf 4 einpasst. Zum Befüllen wird dieses kuppelartige Oberteil der Kapsel 2, das dann noch ein separates Teil bildet, in eine gestürzte Lage gebracht, sodass es eine Schüssel bildet. Diese wird befüllt und hernach wird die Kapsel 2 mit einem kreisscheibenförmigen Siegel 15 aus einem Laminat, welches auf den Kapselrand passt, versiegelt bzw. verschweisst. Hernach ist diese Kapsel 2 hermetisch verschlossen, und eine aspetische Befüllung und Versiegelung ist dadurch gewährleistet. Das kuppelartige Oberteil der Kapsel 2 enthält eine Alufolie und auch das Siegel 15 enthält eine solche, damit die Kapsel 2 sauerstoffdicht und auch lichtdicht ist. Damit eröffnet sie die Möglichkeit zu einer Befüllung auch mit höchst sensitiven, lichtempfindlichen Inhaltstoffen.

Die Figur 2 zeigt den Verschluss mit der zugehörigen, separat befüllten Kapsel 2 mit ihrem gewölbten Oberteil 13 vor deren Einsetzen. Sie wird von unten mit ihrer konvexen Oberseite 13 voran in den Verschluss 1 eingesetzt. Auf ihrer Unterseite ist die Kapsel 2 eben und wird durch das hier separat gezeichnete Siegel 15 verschlossen. Dieses Siegel 15 ist in ganz besonderer Weise als Laminat aufgebaut, weil es verschiedene Funktionen erfüllen muss, nämlich:
1. Hermetisches Verschliessen der Kapsel 2 mittels Versiegeln bzw. Verschweissen mit dem Kapselrand ermöglichen,
2. Sauerstoffdichtigkeit gewährleisten,
3. Wasserdampf-Dichtigkeit gewährleisten,
4. UV-Abschirmung des Kapselinhalts gewährleisten,
5. Aufbrechbarkeit durch Druckknopfbetätigung gewährleisten,
6. Offenstellung nach dem Aufbrechen sicherstellen.

Hierzu besteht dieses Siegel 15 aus einem Laminat, mit einem Trägermaterial 30 von wenigstens 0.2mm Stärke. Als solches Trägermaterial 30 eignet sich zum Beispiel eine kreisrunde Kartonscheibe. Aber auch eine Kunststoffscheibe, eine Holzfurnierscheibe oder eine Kreisscheibe aus einem gepressten organischen Material ist einsetzbar. In Bezug auf die Kapsel 2 nach aussen anschliessend folgt eine auf das Trägermaterial 30 aufgeklebte Barrieren-Folie 31, etwa eine Aluminium- oder EVOH-Folie. Diese wirken als Sauerstoff-, UV- und Wasserdampf-Barriere. Es können auch noch andere Materialien eingesetzt werden, soweit sie eine Barrierenfunktion gegen Sauerstoff, Wasserdampf und UV-Strahlung entfalten. Auf diese Barrieren-Folie 31, zum Beispiel einer Aluminium- oder EVOH-Folie, ist schliesslich eine Siegelschicht 32 in Form eines Lackes oder einer PE-Laminatschicht aufgespritzt bzw. auflaminiert. Diese Spritzlack- oder Laminat-Schicht 32 ist um den äusseren Rand des Siegels 15 herumgezogen, sodass sie also zunächst den äusseren Rand der Barrieren-Folie 31, zum Beispiel einer Aluminium- oder EVOH-Folie, und den Rand des Trägermaterials 30 umbördelt und auf der in Bezug auf die Kapsel inneren Seite des Trägermaterials 30 auf diesem einen umlaufenden, aufliegenden Rand 34 bildet, mittels dessen dass Siegel 15 mit dem Kapselrand versiegelbar ist. Die ganze Dicke des Siegels beträgt in diesem Fall ca. 0.3mm. Es ist aber klar, dass auch dickere Siegel denkbar sind, gerade wenn der Durchmesser des Behälterstutzens und somit auch der Verschlusskapsel grösser ist und einen grösseren Kapseldurchmesser erlaubt. Das Trägermaterial 30 ist mit ganz speziellen Vorkerbungen versehen, welche durch einen Schneid-Plotter erzeugbar sind. Mit einem sehr scharfen Messer kann dieser Schneid-Plotter äusserst genaue und sehr dünne Schnitte ausführen. Im gezeigten Beispiel wurde ein Quadrat geschnitten, wobei die Schnitte ganz knapp vor dem unteren Ende der Trägermaterialdicke enden, sodass jeweils eine ganz feine Materialbrücke stehen bleibt. Die Ecken des Quadrates sind mit diagonalen Schnitten 45 verbunden, die ebenso bis an das untere Ende des Trägermaterials 30 reichen, ohne die darunterliegende Barrieren-Folie 31, das heisst die Alu- oder EVOH-Folie zu erreichen, sodass diese also unversehrt bleibt und ihre Funktion als Sauerstoff-, Wasserdampf und UV-Barriere erfüllt. Diese Schnitte 45 bilden Schwächungslinien, damit das Siegel 15, wie später beschrieben wird, gezielt längs dieser Schwächungslinien aufgebrochen werden kann. Die Schnitte bzw. Schwächungslinien 45 können anstelle eines Kreuzes und Quadrates auch andere Formen annehmen, wie noch gezeigt wird. Das Siegel 15 wird bei gestürztem Oberteil 13 auf die Auskragung 12 (Fig. 1) aufgelegt und mit ihr verschweisst oder versiegelt. Die konvexe Oberseite 13 weist im Zentrum eine Vertiefung 11 auf, in welche der Höcker 9 an der Verschlusskappe 1 hineinzuragen bestimmt ist. Am unteren Rand des Verschlussdeckels 1 ist das Garantieband 3 sichtbar, welches über eine durchgehende Dünnstelle 5 oder über einige Materialbrücken 21 angeformt ist. Beim späteren Losschrauben der Verschlusskappe 1 wird die Dünnstelle 5 abgeschert oder die Materialbrücken 21, die als Sollbruchstellen ausgeführt sind, brechen und geben die Verschlusskappe 1 zum Losschrauben frei.

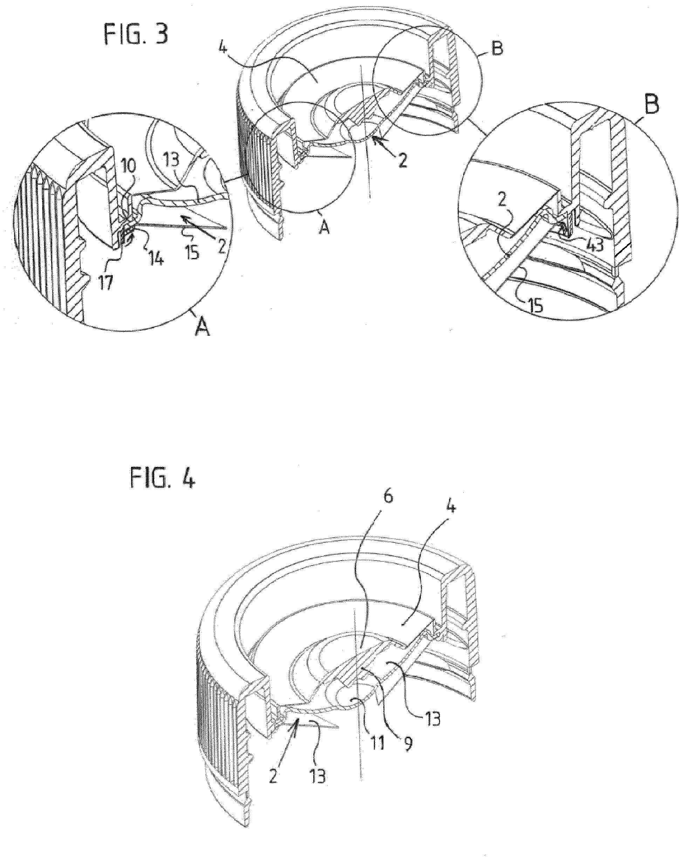

Die Figur 3 zeigt unter Detail A eine erste Lösung, wie die Kapsel 2 in der Verschlusskappe 1 gehalten sein kann. Zur Befestigung der Kapsel 2 auf der nach unten ragenden Schulter 10 auf der Unterseite des kuppelartigen Gewölbes 4 weist diese Schulter 10 an ihrem äusseren Rand in dieser Lösung einen senkrecht auf ihr stehenden Wandvorsatz 17 auf, welcher sich in axialer Richtung zum Verschluss erstreckt. Nach dem Einsetzen der Kapsel 2 wird der Wandvorsatz 17 in warmem Zustand nach innen gegen das Zentrum des Verschlusses hin umgelegt, wie das mit einem kleinen gekrümmten Pfeil eingezeichnet ist, und auf das Siegel 15 angepresst und abgekühlt. Fortan ist die Kapsel 2 durch die entstandene Umbördelung 14 sicher im Verschluss 1 gehalten. Als Alternative können auch - wie in Detaillösung B gezeigt - eine Anzahl Widerhaken 43 über den Umfang verteilt am Wandvorsatz 17 angeformt sein. Die Kapsel 2 ist dann mit ihrem Rand an diesen Widerhaken 43 einklickbar, wonach sie in dieser Lage sicher gehalten ist.

Die Figur 4 zeigt den Verschluss nach dem Niederdrücken der Drückerfläche 6 in einem perspektivisch gesehenen Querschnitt. Durch das Niederdrücken der Drückerfläche 6 und damit des Druckknopfes 4 in axialer Richtung nach unten drückt der Höcker 9 auf die darunterliegende Vertiefung 11 in der Oberseite 13 der eingesetzten Kapsel 2. Dadurch drückt der Inhalt der Kapsel 2 von innen auf ihre Unterseite, das heisst von innen auf das Siegel 15. Wird der Pressdruck hinreichend erhöht, so bricht oder reisst das Siegel 15 unter der entstandenen Dehnkraft längs der Schwächungslinien 45 (Figur 2) und der Kapselinhalt fällt vollständig aus der Kapsel 2 heraus nach unten.

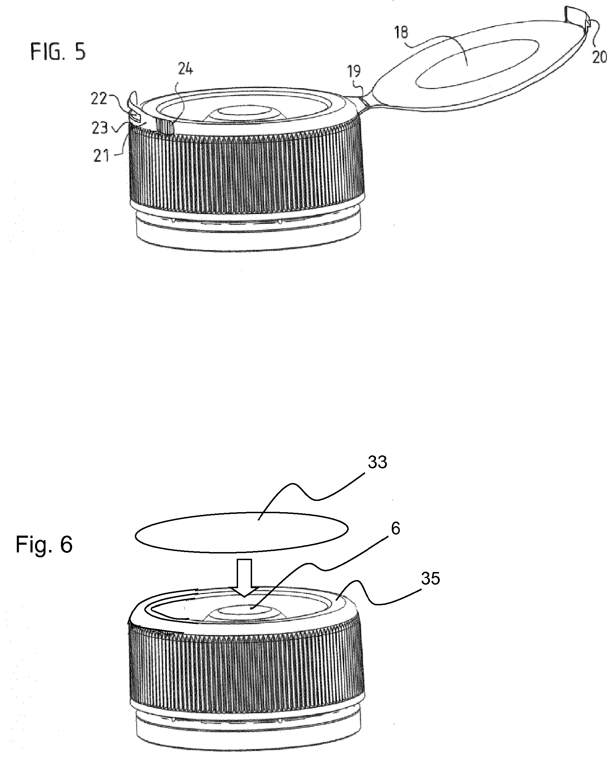

Die Figur 5 zeigt eine erste Lösung für die Realisierung einer Erstöffnungsgarantie an diesem Verschluss, wie er in den Figuren 1 bis 4 vorgestellt ist. Wenn die Verschlusskappe 1 nämlich so wie in den bisher gezeigten Figuren gefertigt wird, kann jedermann die offen zugängliche Drückerfläche 6 niederdrücken und die Kapsel 2 in den Flascheninhalt entleeren. Dieses Drücken auf die Drückerfläche 6 könnte daher missbräuchlich erfolgen: Aus purem Schabernack könnte jemand die Drückerfläche 6 in einer Reihe von Flaschen in einem Regal einfach so niederdrücken. Die Hemmschwelle dazu ist relativ gering. Um das zu vermeiden weist die hier gezeigte Verschlusskappe 1 einen scharnierend an deren Rand angeformten Deckel 18 auf. Am äusseren Rand des Deckels 18, das heisst auf der dem Scharnier 19 gegenüberliegenden Seite des Deckels 18, ist eine Klinke 20 als Schnappelement angeformt. Wird der Deckel 18 umgeschwenkt und auf die Verschlusskappe 1 niedergeschwenkt, so hakt die Klinke 20 in einem Fenster 22 an einem dort angeformten Streifen 21 ein. Der Deckel 18 kann hinfort nur dann aufgeschwenkt werden und den Zugang zum Druckknopf 4 und seiner Drückerfläche 6 freigeben, wenn zunächst der Streifen 21 von der Verschlusskappe 1 weggerissen wird. Hierzu ist der Streifen 21 über eine Dünnstelle 23 am oberen äusseren Rand der Verschlusskappe 1 angeformt. An der Grifflasche 24 kann der Streifen 21 ergriffen und längs des Umfanges der Verschlusskappe 1 weggerissen werden, unter Bruch der Dünnstelle 23. Zum Vermeiden, dass dieser Streifen 21 achtlos weggeworfen wird, kann die Dünnstelle 23 so ausgeführt werden, dass sie sich nicht über die ganze Länge des Streifens 21 erstreckt, sodass dieser nach einem teilweisen Losreissen sicher an der Verschlusskappe 1 gehalten bleibt, jedoch die Klinke 20 freigibt, sodass der Deckel 18 aufgeschwenkt werden kann. Insgesamt besteht die gesamte Verschlusslösung aus einzig drei Teilen, nämlich aus der Deckelkappe 1 mit ihrem allenfalls einstückig angeformten Deckel 18 für die Erstöffnungsgarantie, dann weiter aus der separat befüllbaren Kapsel 2, die ihrerseits aus zwei Teilen besteht, nämlich aus der kuppelartigen Oberseite 13 als schüsselförmiges Spritzteil und dem Siegel 15 zum Verschliessen der Kapsel - insgesamt also aus bloss drei Teilen!

Die Figur 6 zeigt eine zweite Variante einer Erstöffnungsgarantie, indem auf die Oberseite der Verschlusskappe 1 eine Aluminium- oder EVOH-Folie 33 aufgeklebt wird, und zwar längs ihres Randbereiches 35, sodass sie auf der Druckerfläche 6 aufliegt. Beim ersten Gebrauch, das heisst beim Niederdrücken des Druckknopfes, wird diese Folie 33 zerstört und wirkt daher als Erstöffnungsgarantie. Gleichzeitig aber, und das ist sehr bedeutsam, wirkt sie auch von der Oberseite des Verschlusses her als Barriere für Sauerstoff, Wasserdampf und UV, sodass die inliegende Kapsel und ihr Inhalt auch von oben geschützt ist.

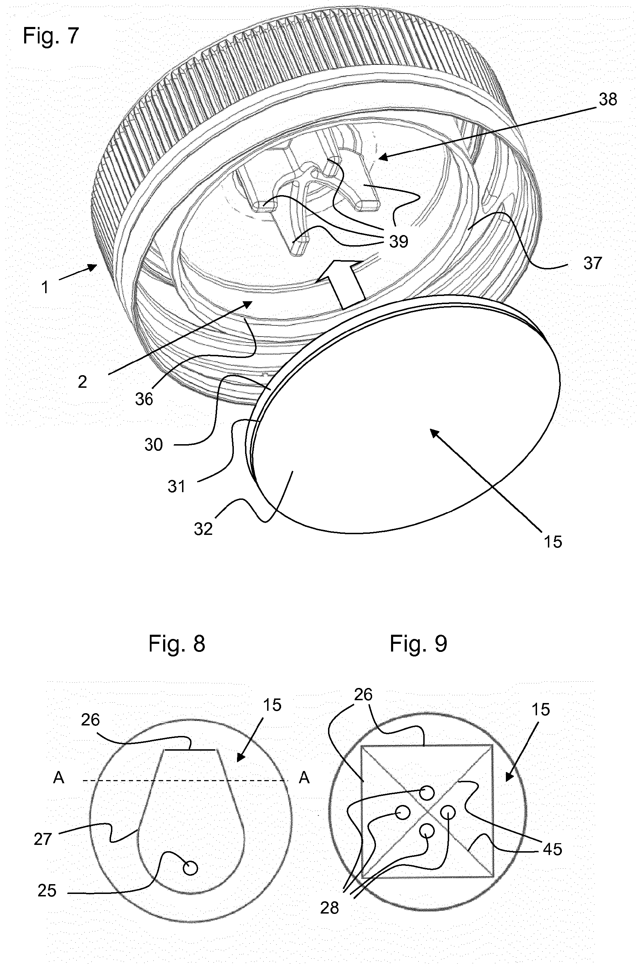

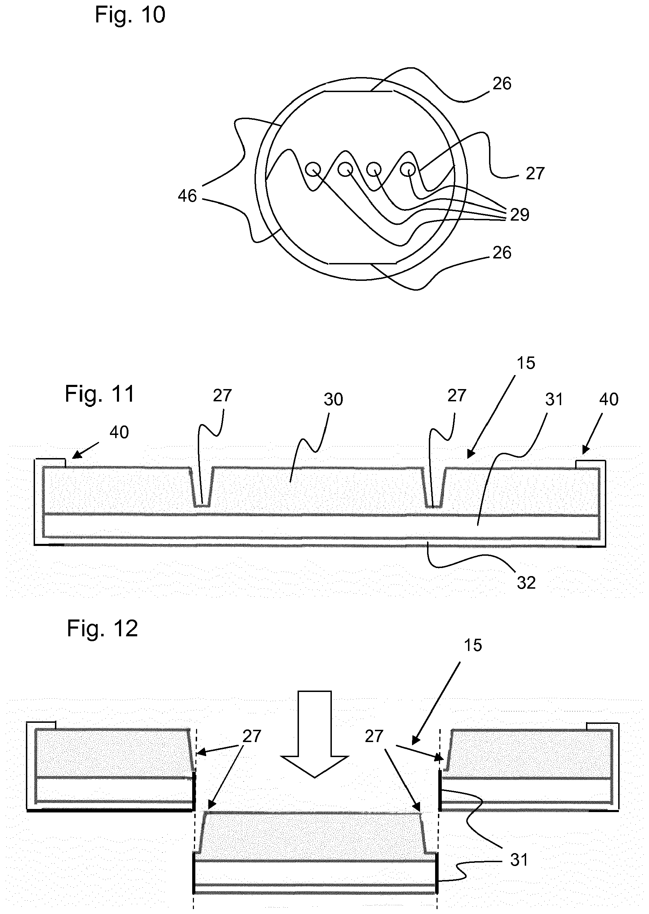

Eine besonderes elegante und effiziente, das heisst ökonomische und technisch trotzdem hervorragend funktionierende Ausführung dieses befüllbaren Verschlusses, der mittels eines Druckknopfes auslösbar ist, ist in Figur 7 dargestellt. Hier bildet die Verschlusskappe 1 selbst die Kapsel 2, indem auf der Unterseite des Verschlusskappendeckels eine zylindrische Wand 36 gebildet ist, auf deren unteren Rand 37 das Siegel 15 aufgesiegelt wird. In der Mitte der Unterseite des Verschlusskappendeckels ist ein Drückerelement 38 angeordnet, das hier ähnlich wie ein Stuhl vier nach unten ragende Beine 39 bildet. Diese drücken mit ihren unteren Enden an ganz bestimmten Punkten auf das Siegel 15, welches ganz gezielt mit Vorkerbungen vorgeschwächt ist. Anhand von Figur 11 und 12 wird die Wirkung der Vorkerbungen noch erklärt. Das Siegel 15 besteht aus dem Trägermaterial 30, der Barrieren-Folie 31 in Form etwa einer Alu- oder EVOH-Folie, und der Siegelfolie oder PE-Laminatschicht 32, die um den Rand des Siegels 15 herum nach oben denselben umbördelt und oben auf dem Siegel 15 in dessen Randbereich aufliegt. Dieses Siegel 15 kann somit nach Befüllen der Kapsel 2 in gestürzter Lage der Verschlusskappe 1 direkt auf den Rand 37 der Zylinderwand 36 aufgesiegelt werden. Wenn die Verschlusskappe 1 auf ihrer Oberseite noch mit einer Alu- oder EVOH-Folie überklebt ist, so ist der Kapselinhalt hermetisch abgeschlossen und vor dem Eindringen von Sauerstoff, Wasserdampf und UV-Strahlung geschützt. Ein Eindringen dieser Stoffe oder von UV-Strahlung in radialer Richtung ist aufgrund der Materialdicke von Gewindekappe, Behälterstutzen und Zylinderwand der Kapsel nicht zu befürchten. Gleichzeitig ist damit wie schon beschrieben eine Erstöffnungsgarantie realisiert. Diese Ausführung des Verschlusses ist auch ökonomisch sehr interessant. Es braucht keine separate Kapsel gefertigt zu werden, was hohe Kosten einspart. Ausserdem ist die Dichtigkeit der Kapsel hervorragend gut. Der ganze Verschluss mit Kapselfunktion besteht einzig aus zwei Bauteilen, sowie optional einer Folie auf dem Deckel des Verschlusses, wenn eine Dichtigkeit gegenüber Sauerstoff, Wasserdampf und UV-Strahlung auch von oben gewünscht ist.

Die Figur 8 zeigt ein Beispiel einer Vorkerbung, nämlich in Form eines hufeisenförmigen Schnittes 27. Die Enden dieses Schnittes 27 sind durch einen geraden Schnitt 26 verbunden. Das Drückerelement 38 muss dann im vorderen Bereich des vom Schnitt 27 eingefassten Hufeisens, etwa beim Punkt 25, auf diese Fläche einwirken. Wenn dort Druck aufgebracht ist, so wirkt sich die Dicke des Trägermaterials 30 infolge der Geometrie so aus, dass grosse Hebelkräfte entstehen und somit grosse Spannungskräfte unterhalb des Schnittes quer zum Schnitt erzeugt werden, sodass die darunterliegende Folie 31 genau dort aufgerissen wird und dann längs der hufeisenförmigen Schnittlinie 27 aufgeschnitten wird, während der hufeisenförmige, von dieser Linie eingeschlossene Lappen um die gerade Schnittlinie 26 nach unten geschwenkt wird. Die nicht durchbrochene Folie längs der Linie 26 wirkt dann als Scharnier.

Die Figur 9 zeigt ein Beispiel einer Vorkerbung mit geraden Schnitten 26, 45. Es ist ein Quadrat mit diesen geraden Schnitten 26 ausgeschnitten bzw. das Trägermaterial 30 ist beinahe durchschnitten. Dann wurden die Diagonalen 45 ebenfalls fast durchgeschnitten. Die Punkte 28, an welchen das Drückerelement 38 angreifen soll, bzw. welche mit Druck beaufschlagt werden sollen, liegen nahe beim Kreuzungspunkt der Diagonalen 45. Auch hier erzeugt der Druck auf die eingezeichneten Punkte 28, dass unterhalb der Schnittlinien 45 quer zu denselben grosse Spannungskräfte aufgrund der Hebelwirkung des dicken Trägermaterials 30 erzeugt werden und die darunterliegenden Folien 31, 32 längs dieser diagonalen Schnitte aufgebrochen werden. Die ausgebrochenen Dreiecksegmente im Siegel 15 werden um die geraden Linien 26 nach unten geschwenkt, was eine zuverlässige Entleerung der Kapsel 2 ermöglicht.

Die Figur 10 zeigt ein weiteres Beispiel einer Vorkerbung mit geraden Schnitten 26 und gekrümmten Schnitten 27. Die Druckpunkte 29 für das Drückerelement 38 liegen hier auf einer Linie. Beim Aufdrücken bricht das Siegel 15 zunächst längs der Schlangenlinie 27 und hernach längs der halbkreisförmigen Schnittlinien 46, während die längs der geraden Schnittlinien 26 nicht aufgebrochene Folie als Scharnier wirkt. Die herausgebrochenen Teile beidseits der Schlangenlinie 27 werden um die Schnittlinien 26 nach unten geklappt und sorgen für ein vollständiges Entleeren der Kapsel.

Die Figur 11 zeigt einen Querschnitt durch das Siegel 15, längs der gestrichelten Linie A-A aus Figur 8. Das Siegel 15 ist von einem Laminat gebildet. Zuoberst, dem Kapselinnern zugewandt, besteht das Laminat aus einem Trägermaterial 30, zum Beispiel aus einer Kartonscheibe, einer Kunststoff- oder Holzfurnierscheibe. Auf diese ist unten eine Barrieren-Folie 31, zum Beispiel eine Aluminiumfolie oder EHOV-Folie aufgeklebt. Zuunterst ist das Siegel mit einem Siegellack 32 versehen, oder mit einer PE-Laminatschicht. Dieser Lack oder diese PE-Laminatschicht 32 ist rund um den Rand herum nach oben gebördelt und umfasst das Siegel 15 um seinen Rand und liegt oben auf seinem Randbereich 40 auf.

Die Figur 12 zeigt auf, wie das Siegel 15 durchbrochen wird, wenn der hufeisenförmige Lappen in seinem vorderen Bereich vom Drückerelement 38 mit Druck beaufschlagt wird. Die dünnen, durch die Vorkerbungen 27 geschwächten Stellen der Barrieren-Folie 31, das heisst zum Beispiel der Aluminium- oder EVOH-Folie, brechen durch und der Lappen wird um die Scharnierlinie 26 nach unten geschwenkt.

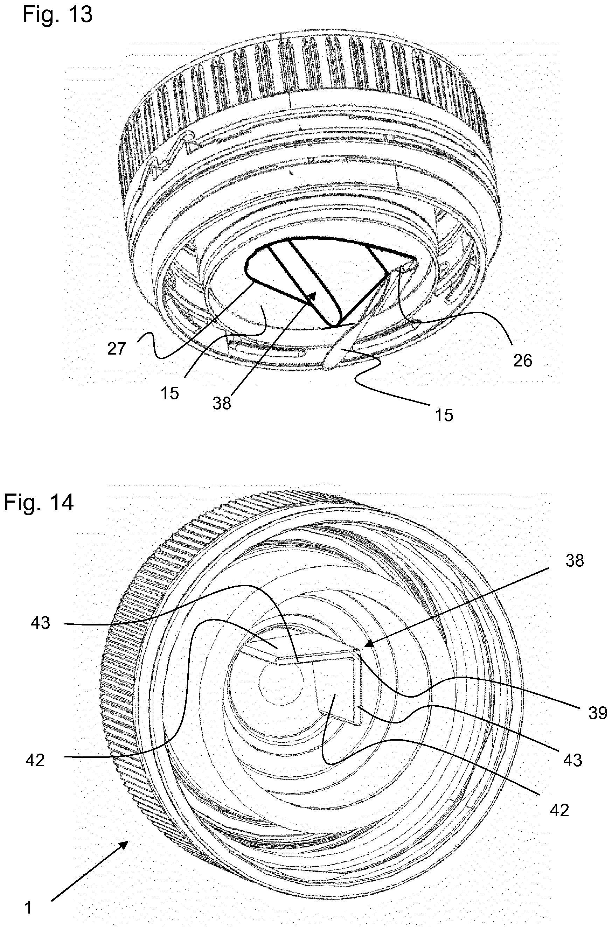

Die Figur 13 zeigt dieses Abschwenken des hufeisenförmigen Lappens um das längs der geraden Schnittlinie 26 gebildete Scharnier 26, während der Lappen längs der Schnittlinie 27 aus dem Siegel 15 gebrochen wurde. Das Drückerelement 38 schwenkt ihn nach abwärts und hält ihn hernach in dieser abgeschwenkten Lage fest, damit er nicht mehr zurückschwenken kann und die Kapsel vollständig entleert werden kann.

Die Figur 14 zeigt eine weitere Variante einer Verschlusskappe mit einem speziellen Drückerelement 38. Dieses weist im Querschnitt eine V-Form auf. Es werden also zwei Schenkel in Form von Wänden 42 gebildet, die über ihre Länge fest und einstückig mit dem Boden der Kapsel 2 verbunden sind. Die an der Verschlusskappe 1 nach abwärts gerichteten freien Ränder 43 dieses V-förmigen Drückerelementes 38 steigen gegen eine Spitze 39 hin an, wo sich die beiden Wände 42 treffen. Damit ist eine sehr stabile Stech- und Drückerspitze 39 gebildet. Dieses Drückerelement 38 ist aufgrund seiner Gestaltung besonders stabil. Wird es durch Drücken von oben auf die unter dem Drückerelement 38 verlaufende Folie gepresst, so sticht oder bricht die Dückerelement-Spitze 39 zunächst die Folie auf, ob diese nun mit Schwächungslinien versehen ist oder nicht, und hernach wirken die oberen Ränder 43 der Wände 42 auf die geöffnete Folie und klappen sie nach unten, für eine sichere Entleerung der Kapsel.

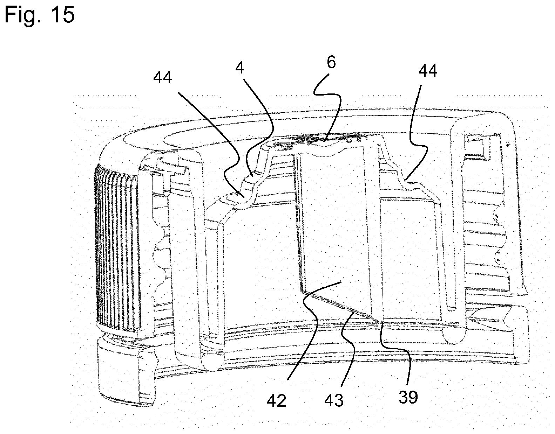

Die Figur 15 zeigt einen diametralen Schnitt durch diese Verschlusskappe nach Figur 14. Man erkennt, dass der Druckknopf 4 in seiner Wand eine umlaufende nach innen gebogene Rille 44 aufweist, welche das Kollabieren des Druckknopfes 4 bei Druck auf die Drückerfläche 6 erleichtert und unterstützt. Selbstverständlich kann die Druckknopfwand auch mehrere solcher Rillen 44 aufweisen, auch nach aussen gebogene, oder die Wand kann in radialer Verlaufrichtung auch eine Schlangenlinie oder einen Balg bilden.

### Ziffernverzeichnis

1 Verschlusskappe
2 Kapsel
3 Umlaufendes Band unten an 1 (Garantieband)
4 Druckknopf an Verschlusskappe
5 Dünnstelle an Band 3
6 Drückerfläche am Druckknopf
7 Innengewinde der Verschlusskappe
8 Einlassung auf Oberseite der Verschlusskappe
9 Höcker unten an Drückerfläche
10 Schulter am Druckknopf
11 Vertiefung im Zenit der Kapsel 2
12 Ebene radiale Auskragung an separater Kapsel
13 Gewölbte Oberseite der separaten Kapsel
14 Umbördelung an einsetzbarer Kapsel
15 Siegel für Kapsel
16 Materialbrücken
17 Scharnier
18 Scharnier
19 Scharnier
20 Klinke
21 Streifen
22 Fenster
23 Dünnstelle
24 Grifflasche
25 Druckpunkt
26 Gerader Schnitt
27 Gekrümmter Schnitt
28 Punkte im Quadrat
29 Druckpunkte bei Schlangenlinie
30 Trägermaterial Siegel 15
31 Barrieren-Folie, z.B. Aluminium- oder EVOH Folie
32 Siegellack oder PE-Laminatschicht
33 EVOH Folie oben auf dem Deckel der Verschlusskappe
34 halbkreisförmige Schnitte (Fig. 10)
35 Rand oben auf der Verschlusskappe
36 Zylinderwand unten in der Verschlusskappe
37 Rand der Zylinderwand
38 Drückerelement
39 Bein am stuhlförmigen Drückerelement
40 Randbereich des Siegels 15
41 Materialbrücken
42 Wände des V-förmigen Drückerelementes
43 Freie Ränder des V-förmigen Drückerelementes
44 Gebogene Rille in der Druckknopfwand
45 Diagonale Schnitt- oder Schwächungslinien
46 Halbkreisförmige Schnittlinien

## Patentansprüche

1. Befüllbarer Verschluss mit Druckknopf zum Auslösen der Entleerung, bestehend aus einer auf den Gewindestutzen eines Behälters aufschraubbaren Verschlusskappe (1), welche eine befüllbare, unten offene Kapsel (2) bildet oder in welche eine separate befüllbare Kapsel (2) einsetzbar ist, mit nach unten gerichtetem Siegel (15) der Kapsel (2), wobei die Oberseite (13) der Kapsel (2) deformierbar ausgeführt ist und nach unten drückbar ist, sodass das nach unten gerichtete Siegel (15) der Kapsel (2) durch diese Aktion aufbrechbar oder aufplatzbar ist, indem an der Unterseite der Verschlusskappe (1) ein axial nach unten ragendes Drückerelement (38) angeformt ist, zum Aufdrücken des Siegels (15) der Kapsel (2), wobei das Drückerelement (38) in der Verschlusskappe (1) entweder im Querschnitt senkrecht zur Rotationsachse der Verschlusskappe (1) V-förmig gestaltet ist, sodass zwei Wände (42) als Schenkel gebildet sind, die über ihre Länge einstückig mit dem Boden der Kapsel (2) verbunden sind, und dass die nach abwärts gerichteten freien Ränder (43) dieses im Querschnitt V-förmigen Drückerelementes (38) gegen eine Spitze (39) auslaufen, wo sich die beiden Wände treffen, oder alternativ dass mit einem Drückerelement (38) ein hufeisenförmiger Lappen um einen längs einer geraden Schnittlinie (26) am Siegel (15) gebildetes Scharnier nach abwärts schwenkbar ist, nachdem dieser Lappen längs einer Schnittlinie (27) aus dem Siegel (15) gebrochen wurde, und das Drückerelement (38) diesen Lappen hernach in dieser abgeschwenkten Lage festhält, damit er nicht mehr zurückschwenken kann, und die Kapsel somit vollständig entleert werden kann, sodass in beiden Varianten eine Folie zunächst aufstech- oder aufbrechbar ist, und hernach nach unten abklappbar ist,
***dadurch gekennzeichnet,* dass** das Siegel (15) aus einem Laminat besteht, mit einem Trägermaterial (30) von wenigstens 0.2mm Stärke, daran in Bezug auf die Kapsel (2) nach aussen anschliessend einer Barrieren-Folie (31) als Sauerstoff-, Wasserdampf- und UV-Strahlungs-Barriere und auf dieser Barrieren-Folie (31) eine Siegelschicht (32) in Form eines Lackes oder einer PE-Laminatschicht aufgespritzt oder auflaminiert ist, welche das Siegel (15) an seinem äusseren Rand um den Rand der Barrieren-Folie (31) und den Rand des Trägermaterials (30) herum umbördelt und auf der in Bezug auf die Kapsel (2) inneren Seite des Trägermaterials (30) auf diesem einen umlaufenden Rand bildet, mittels dessen es mit dem Kapselrand versiegelbar ist, und dass das Trägermaterial (30) Vorkerbungen (27) in Form von Schnitten (26, 27, 45, 46) aufweist, welche das Trägermaterial (30) annähernd durchschneiden, die anschliessenden Folien (31, 32) jedoch intakt lassen.

2. Befüllbarer Verschluss mit Druckknopf zum Auslösen der Entleerung nach Anspruch 1, **dadurch gekennzeichnet, dass** die Wand des Druckknopfs (4) mindestens eine umlaufende nach innen oder aussen gebogene Rille (44) aufweist, zur Unterstützung und Erleichterung des Kollabierens des Druckknopfes (4) bei Druck auf die Drückerfläche (6) (Figur 15).

3. Befüllbarer Verschluss mit Druckknopf zum Auslösen der Entleerung nach Anspruch 1, **dadurch gekennzeichnet, dass** die Wand des Druckknopfs (4) in radialer Richtung durch mehrere Rillen (44) eine Schlangenlinie bildet oder die Wand als Balg ausgebildet ist (Figur 15).

4. Befüllbarer Verschluss mit Druckknopf zum Auslösen der Entleerung nach einem der vorangehenden Ansprüche, **dadurch gekennzeichnet, dass** die Kapsel (2) durch die Verschlusskappe (1) selbst gebildet ist, indem diese auf der Unterseite des Deckels der Verschlusskappe (1) eine zylindrische Wand (36) ausformt, und die befüllte Kapsel (2) in gestürzter Lage vom Siegel (15) verschliessbar ist, das auf den unteren Rand (37) der zylindrischen Wand (36) aufsiegelbar ist (Figur 7).

5. Befüllbarer Verschluss mit Druckknopf zum Auslösen der Entleerung nach einem der vorangehenden Ansprüche, **dadurch gekennzeichnet, dass** die Kapsel (2) auf ihrer vom Deckel der Verschlusskappe (1) gebildeten Teil vor Eintritt von Sauerstoff, Wasserdampf und UV-Strahlung geschützt ist, indem auf der Aussenseite des Deckels der Verschlusskappe (1) eine Aluminium- oder EVOH-Folie (33) längs des Randbereichs (35) des Deckels aufgeklebt ist, sodass diese Folie (33) auf der Drückerfläche des Drückerelementes (38) aufliegt und gleichzeitig eine Erstöffnungsgarantie bildet (Figur 6).

6. Befüllbarer Verschluss mit Druckknopf zum Auslösen der Entleerung nach einem der Ansprüche 1 bis 3, **dadurch gekennzeichnet, dass** die Kapsel (2) eine separat hergestellte und separat befüllte Kapsel (2) ist, die von unten in die Verschlusskappe (1) einsetzbar ist, und in gestürzter Lage ihre obere Seite so ausgeformt ist, dass das Drückerelement (38) an der Unterseite des Deckels der Verschlusskappe (1) in sie einpasst und auf ausgewählte Druckpunkte (25, 28, 29) auf dem Siegel (15) ausgerichtet ist (Figuren 8, 9 und 10).

7. Befüllbarer Verschluss mit Druckknopf zum Auslösen der Entleerung nach einem der vorangehenden Ansprüche, **dadurch gekennzeichnet, dass** das Siegel (15) aus einem Laminat aus einem Trägermaterial (30) in Form einer Kartonscheibe, Kunststoffscheibe besteht, auf die Barrieren-Folie (31) aufgeklebt ist, und auf Barrieren-Folie (31) ein Siegellack oder eine PE-Laminatschicht (32) aufgespritzt bzw. auflaminiert ist, wobei dieser Siegellack oder die PE-Laminatschicht (32) den äusseren Rand des Siegels (15) umbördelt und oben auf dem Randbereich (40) des Siegels (15) aufliegt und damit mit der Kapsel (2) versiegelbar ist.

8. Befüllbarer Verschluss mit Druckknopf zum Auslösen der Entleerung nach einem der vorangehenden Ansprüche, **dadurch gekennzeichnet, dass** das Trägermaterial (30) des Siegels Vorkerbungen aufweist, welche die Form eines Quadrates und in diesem Quadrat Diagonalen (45) bildet, sodass vier längs der Quadratseiten abschwenkbare Dreiecke gebildet sind (Figur 9).

9. Befüllbarer Verschluss mit Druckknopf zum Auslösen der Entleerung nach einem der Ansprüche 1 bis 7, **dadurch gekennzeichnet, dass** das Trägermaterial (30) des Siegels (15) Vorkerbungen aufweist, bestehend aus einem hufeisenförmigen Schnitt (27) sowie einem dessen beiden Enden verbindenden geraden Schnitt (26), wobei das Material längs dieses Schnittes (26) beim Abschwenken des herausgebrochenen hufeisenförmigen Lappens als Scharnier zu wirken bestimmt ist (Figur 8).

10. Befüllbarer Verschluss mit Druckknopf zum Auslösen der Entleerung nach einem der Ansprüche 1 bis 7, **dadurch gekennzeichnet, dass** das Trägermaterial (30) des Siegels (15) Vorkerbungen (26,27,46) aufweist, bestehend aus einem annähernd ganzen kreisförmigen Schnitt (46) längs des Randes des Siegels (15), wobei dieser Schnitt (46) auf beiden Seiten des Kreises je einen geraden Sekantenabschnitt (26) bildet, und in paralleler Richtung zu diesen beiden geraden Sekantenschnitten (26) in der Mitte der Siegelfolie (15) eine längs der Diametralen verlaufende Schlangenlinie (27) ausgeschnitten ist, sodass die beiden Hälften beidseits der Schlangenlinie (27) um die Sekantenschnitte (26) abschwenkbar sind (Figur 10).

## Claims

1. Fillable closure with push-button for triggering emptying, consisting of a closure cap (1) which can be screwed onto the threaded connection piece of a container and which forms a fillable capsule (2) open at the bottom or into which a separate fillable capsule (2) can be inserted, with the seal (15) of the capsule (2) directed downwards, the upper side (13) of the capsule (2) being designed to be deformable and pressable downwards, so that the downwardly directed seal (15) of the capsule (2) can be broken or burst by this action, in that an axially downwardly projecting pusher element (38) is integrally formed on the underside of the closure cap (1), for pressing open the seal (15) of the capsule (2), the pusher element (38) being designed in the closure cap (1) either in a V-shape in cross section perpendicular to the axis of rotation of the closure cap (1) so that two walls (42) are formed as legs which are integrally connected to the bottom of the capsule (2) over their length, and that the downwardly directed free edges (43) of this cross-sectionally V-shaped pusher element (38) taper towards a tip (39) where the two walls meet, or alternatively that a horseshoe-shaped lug can be pivoted downwardly with a pusher element (38) about a hinge formed along a straight line of cut (26) on the seal (15) after this flap has been broken along a cutting line (27) from the seal (15), and the pusher element (38) subsequently holds this flap in this pivoted-down position so that it can no longer pivot back, and the capsule can thus be completely emptied, so that in both variants a film can first be pierced or broken open, and can then be folded downwards, **characterized in that** the seal (15) consists of a laminate, with a carrier material (30) of at least 0.2mm thick, adjoining this towards the outside with respect to the capsule (2) a barrier film (31) as an oxygen, water vapour and UV radiation barrier, and on this barrier film (31) a sealing layer (32) in the form of a lacquer or a PE laminate layer is sprayed or laminated on, which beads the seal (15) at its outer edge around the edge of the barrier film (31) and the edge of the carrier material (30) and on the inner side of the carrier material (30) in relation to the capsule (2) forms a circumferential edge on the latter, by means of which it can be sealed to the capsule edge, and **in that** the carrier material (30) has preliminary notches (27) in the form of cuts (26, 27, 45, 46) which approximately cut through the carrier material (30) but leave the adjoining films (31, 32) intact.

2. Fillable closure with push-button for triggering the discharge according to claim 1, **characterized in that** the wall of the push-button (4) has at least one circumferential inwardly or outwardly curved groove (44) for supporting and facilitating the collapse of the push-button (4) when pressure is exerted on the pusher surface (6) (Figure 15).

3. Fillable closure with push-button for triggering the discharge according to claim 1, **characterized in that** the wall of the push-button (4) forms a serpentine line in the radial direction through a plurality of grooves (44) or the wall is formed as a bellows (Figure 15).

4. Fillable closure with push-button for triggering the discharge according to one of the preceding claims, **characterized in that** the capsule (2) is formed by the closure cap (1) itself, **in that** the latter forms a cylindrical wall (36) on the underside of the lid of the closure cap (1), and the filled capsule (2) can be closed in the overturned position by the seal (15), which can be sealed onto the lower edge (37) of the cylindrical wall (36) (Figure 7).

5. Fillable closure with push-button for triggering the discharge according to one of the preceding claims, **characterized in that** the capsule (2) is protected on its part formed by the lid of the closure cap (1) against the ingress of oxygen, water vapor and UV radiation **in that** an aluminum or EVOH foil (33) is bonded to the outside of the lid of the closure cap (1) along the edge region (35) of the lid, so that this foil (33) rests on the pusher surface of the pusher element (38) and at the same time forms a first-opening guarantee (Figure 6).

6. Fillable closure with push-button for triggering emptying according to one of the claims 1 to 3, **characterized in that** the capsule (2) is a separately manufactured and separately filled capsule (2) which can be inserted into the closure cap (1) from below and in the overturned position its upper side is shaped so that the pusher element (38) on the underside of the lid of the closure cap (1) fits into it and is aligned with selected pressure points (25, 28, 29) on the seal (15) (Figures 8, 9 and 10).

7. Fillable closure with push-button for triggering the discharge according to one of the preceding claims, **characterized in that** the seal (15) consists of a laminate of a carrier material (30) in the form of a cardboard disc, plastic disc, to which barrier film (31) is glued, and a sealing lacquer or a PE laminate layer (32) is sprayed or laminated onto barrier film (31), this sealing lacquer or PE laminate layer (32) beading the outer edge of the seal (15) and being applied to the top of the edge region (40) of the seal (15). laminated onto the barrier film (31), this sealing lacquer or PE laminate layer (32) flanging the outer edge of the seal (15) and resting on top of the edge region (40) of the seal (15) and thus being sealable to the capsule (2).

8. Fillable closure with push-button for triggering the discharge according to one of the preceding claims, **characterized in that** the carrier material (30) of the seal has pre-notches which form the shape of a square and diagonals (45) in this square, so that four triangles are formed which can be swung away along the sides of the square (Figure 9).

9. Fillable closure with push-button for triggering the discharge according to one of the claims 1 to 7, **characterized in that** the support material (30) of the seal (15) has pre-notches consisting of a horseshoe-shaped cut (27) as well as a straight cut (26) connecting its two ends, the material along this cut (26) being intended to act as a hinge when the broken-out horseshoe-shaped tab is pivoted off (Figure 8).

10. Fillable closure with push-button for triggering the discharge according to one of claims 1 to 7, **characterized in that** the support material (30) of the seal (15) has pre-notches (26,27,46) consisting of an approximately whole circular cut (46) along the edge of the seal (15), this cut (46) forming a straight secant section (26) on each side of the circle, and in a direction parallel to these two straight secant sections (26), a serpentine line (27) running along the diametral line is cut out in the middle of the sealing film (15), so that the two halves can be pivoted off on either side of the serpentine line (27) about the secant sections (26) (Figure 10).

## Revendications

1. Fermeture remplissable avec bouton-poussoir pour déclencher la vidange, constituée d'un capuchon de fermeture (1) pouvant être vissé sur la tubulure filetée d'un récipient, qui forme une capsule (2) remplissable, ouverte vers le bas, ou dans laquelle peut être insérée une capsule (2) remplissable séparée, avec un sceau (15) de la capsule (2) orienté vers le bas, la face supérieure (13) de la capsule (2) étant réalisée déformable et pouvant être pressée vers le bas, de sorte que le sceau (15) de la capsule (2) orienté vers le bas peut être brisé ou éclaté par cette action, en ce qu'un élément de poussée (38) faisant saillie axialement vers le bas est formé sur la face inférieure du capuchon de fermeture (1), pour pousser le sceau (15) de la capsule (2), l'élément de poussée (38) dans le capuchon de fermeture (1) étant conçu soit en forme de V en section transversale perpendiculaire à l'axe de rotation du capuchon de fermeture (1), de sorte que deux parois (42) sont formées en tant que branches, qui sont reliées d'un seul tenant sur leur longueur au fond de la capsule (2), et que les bords libres (43) dirigés vers le bas de cet élément de poussée (38) en forme de V en section transversale se terminent contre une pointe (39), où les deux parois se rencontrent, ou en alternative qu'une patte en forme de fer à cheval peut être pivotée vers le bas avec un élément de poussée (38) autour d'une charnière formée le long d'une ligne de coupe droite (26) sur le sceau (15), après que cette languette a été rompue le long d'une ligne de coupe (27) du sceau (15), et l'élément poussoir (38) maintient ensuite cette languette dans cette position pivotée vers le bas, afin qu'elle ne puisse plus pivoter vers l'arrière et que la capsule puisse ainsi être entièrement vidée, de sorte que dans les deux variantes, un film peut d'abord être percé ou rompu, et peut ensuite être rabattu vers le bas, **caractérisé en ce que** le sceau (15) est constitué d'un stratifié comprenant un matériau de support (30) d'au moins 0. 2 mm d'épaisseur, d'un film barrière (31) qui s'y raccorde vers l'extérieur par rapport à la capsule (2) et qui sert de barrière contre l'oxygène, la vapeur d'eau et le rayonnement UV, et d'une couche de scellage (32) sous la forme d'un vernis ou d'une couche de stratifié PE appliquée par pulvérisation ou par laminage sur ce film barrière (31), qui borde le sceau (15) sur son bord extérieur autour du bord du film barrière (31) et du bord du matériau de support (30) et forme sur le côté intérieur du matériau de support (30) par rapport à la capsule (2) un bord périphérique sur celui-ci, au moyen duquel il peut être scellé au bord de la capsule, et **en ce que** le matériau de support (30) présente des pré-encoches (27) sous forme de coupures (26, 27, 45, 46) qui coupent approximativement le matériau de support (30), mais laissent intacts les films (31, 32) qui s'y raccordent.

2. Fermeture remplissable avec bouton-poussoir pour déclencher le vidage selon la revendication 1, **caractérisée en ce que** la paroi du bouton-poussoir (4) présente au moins une rainure périphérique (44) courbée vers l'intérieur ou vers l'extérieur, pour soutenir et faciliter l'affaissement du bouton-poussoir (4) lors de la pression sur la surface de poussée (6) (figure 15).

3. Bouchon remplissable avec bouton-poussoir pour déclencher la vidange selon la revendication 1, **caractérisé en ce que** la paroi du bouton-poussoir (4) forme une ligne sinueuse dans le sens radial à travers plusieurs rainures (44) ou **en ce que** la paroi est réalisée sous forme de soufflet (figure 15).

4. Bouchon remplissable à bouton-poussoir pour déclencher la vidange selon l'une des revendications précédentes, **caractérisé en ce que** la capsule (2) est formée par le bouchon (1) lui-même, **en ce que** celui-ci forme une paroi cylindrique (36) sur la face inférieure du couvercle du bouchon (1), et la capsule (2) remplie peut être fermée en position renversée par le sceau (15) qui peut être scellé sur le bord inférieur (37) de la paroi cylindrique (36) (figure 7).

5. Bouchon remplissable à bouton-poussoir pour déclencher la vidange selon l'une des revendications précédentes, **caractérisé en ce que** la capsule (2) est protégée de l'entrée d'oxygène, de vapeur d'eau et de rayonnement UV sur sa partie formée par le couvercle du bouchon (1), en collant sur la face extérieure du couvercle de la capsule (1) une feuille d'aluminium ou d'EVOH (33) le long de la zone marginale (35) du couvercle, de sorte que cette feuille (33) repose sur la surface de poussée de l'élément de poussée (38) et constitue simultanément une garantie de première ouverture (figure 6).

6. Bouchon remplissable avec bouton-poussoir pour déclencher la vidange selon l'une des revendications 1 à 3, **caractérisé en ce que** la capsule (2) est une capsule (2) fabriquée séparément et remplie séparément, qui peut être insérée par le bas dans le bouchon (1), et, en position renversée, sa face supérieure est formée de manière à ce que l'élément poussoir (38) situé sur la face inférieure du couvercle du capuchon de fermeture (1) s'y adapte et soit aligné avec des points de pression sélectionnés (25, 28, 29) sur le sceau (15) (figures 8, 9 et 10).

7. Fermeture remplissable avec bouton-poussoir pour déclencher le vidage selon l'une des revendications précédentes, **caractérisée en ce que** le sceau (15) est constitué d'un stratifié d'un matériau de support (30) sous forme d'un disque en carton, d'un disque en matière plastique, sur lequel est collée une feuille de barrière (31), et une laque de scellement ou une couche de stratifié PE (32) est pulvérisée ou appliquée sur la feuille de barrière (31), cette laque de scellage ou cette couche de laminé PE (32) étant rabattue sur le bord extérieur du sceau (15) et reposant en haut sur la zone de bord (40) du sceau (15) et pouvant ainsi être scellée avec la capsule (2).

8. Fermeture remplissable avec bouton-poussoir pour déclencher la vidange selon l'une des revendications précédentes, **caractérisée en ce que** le matériau de support (30) du sceau présente des pré-entailles qui forment la forme d'un carré et, dans ce carré, des diagonales (45), de sorte que quatre triangles pivotant le long des côtés du carré sont formés (figure 9).

9. Bouchon remplissable à bouton-poussoir pour déclencher la vidange selon l'une quelconque des revendications 1 à 7, **caractérisé en ce que** le matériau support (30) du sceau (15) présente des prédécoupes constituées d'une découpe (27) en forme de fer à cheval et d'une découpe rectiligne (26) reliant ses deux extrémités, le matériau étant destiné à jouer le rôle de charnière le long de cette découpe (26) lors du pivotement de la languette en forme de fer à cheval arrachée (figure 8).

10. Bouchon remplissable à bouton-poussoir pour déclencher la vidange selon l'une des revendications 1 à 7, **caractérisé en ce que** le matériau support (30) du sceau (15) présente des pré-encoches (26, 27, 46) constituées d'une découpe circulaire (46) approximativement entière le long du bord du sceau (15), cette découpe (46) formant de part et d'autre du cercle une section sécante droite (26), et une ligne sinueuse (27) s'étendant le long de la ligne diamétrale étant découpée au milieu de la feuille de scellage (15) dans une direction parallèle à ces deux sections sécantes droites (26), de sorte que les deux moitiés peuvent pivoter autour des sections sécantes (26) de part et d'autre de la ligne sinueuse (27) (figure 10).
